(19) Europäisches Patentamt / European Patent Office / Office européen des brevets

(11) **EP 1 545 035 B1**

(12) **FASCICULE DE BREVET EUROPEEN**

(45) Date de publication et mention
de la délivrance du brevet:
**02.09.2009 Bulletin 2009/36**

(51) Int Cl.:
***H04J 14/02*** *(2006.01)*

(21) Numéro de dépôt: **04292593.3**

(22) Date de dépôt: **02.11.2004**

(54) **Dispositif de brassage spatio-fréquentiel de signaux pour répéteur de télécommunications d'un satellite, répéteur et satellite associés**

Raum- und Frequenz-Crossconnect für einen Satelliten-Kommunikation-Verstärker und zugehöriger Verstärker und Satellit

Spatial/frequency cross-connecting apparatus for a satellite telecommunications repeater and associated repeater and satellite

(84) Etats contractants désignés:
**DE FR**

(30) Priorité: **19.12.2003 FR 0314983**

(43) Date de publication de la demande:
**22.06.2005 Bulletin 2005/25**

(73) Titulaire: **Thales**
**92200 Neuilly-sur-Seine (FR)**

(72) Inventeurs:
• **Sotom, Michael**
**31000 Toulouse (FR)**
• **Benazet, Benoit**
**31320 Castanet Tolosan (FR)**
• **Barthere, Arnaud**
**32600 Aurade (FR)**
• **Maignan, Michel**
**31860 Pins Justaret (FR)**

(74) Mandataire: **Esselin, Sophie et al**
**Marks & Clerk France**
**Conseils en Propriété Industrielle**
**Immeuble " Visium "**
**22, avenue Aristide Briand**
**94117 Arcueil Cedex (FR)**

(56) Documents cités:
**EP-A- 1 017 242**

• SHIEH W ET AL: "MICROWAVE SIGNAL MIXING BY USING A FIBER-BASED OPTOELECTRONIC OSCILLATOR FOR WAVELENGTH-DIVISION MULTIPLEXED SYSTEMS" CONFERENCE ON OPTICAL FIBER COMMUNICATIONS. DALLAS, FEB. 16 - 21, 1997, NEW YORK, IEEE, US, 16 février 1997 (1997-02-16), pages 358-359, XP009006333 ISBN: 0-7803-3860-X
• HUSBANDS, C.R. ; DEVINE, J.F.: "Wideband analog signal transmission in all-optical networks" CHAOTIC CIRCUITS FOR COMMUNICATION, vol. 2612, 23 octobre 1995 (1995-10-23), - 24 octobre 1995 (1995-10-24) pages 115-124, XP008032748 PHILADELPHIA, PENNSYLVANIA, USA

**EP 1 545 035 B1**

**Description**

La présente invention est relative ou domaine des télécommunications spatiales et concerne plus particulièrement un dispositif de brassage spatio-fréquentiel de signaux pour un répéteur de télécommunications au sein d'un véhicule spatial de télécommunications.

A bord d'un véhicule spatial tel qu'un satellite de télécommunications sont embarqués de nombreux équipements électroniques tels que des amplificateurs, des récépteurs, des filtres, des commutateurs, etc. Ces équipements appartiennent par exemple au système de transmission de signaux télévisés au téléphoniques par satellite.

Lors du lancement du satellite, une configuration de fonctionnement nominale est choisie, c'est- à- dire que l'on sélectionne un certain nombre de canaux pour la transmission de signaux téléphoniques, un certain nombre de canaux pour la transmission de signaux télévisés, ou encore certaines connexions entre les canaux montants et les canaux descendants. Au cour de la vie du satellite, et pour des raisons commerciales notamment, il se peut que cette configuration soit modifiée. Afin de reconfigurer les équipements pour satisfaire à la demande, les stations de commande et de contrôle au sol émettent par voie hertzienne des signaux de télécommande transmis à un récepteur se trouvant à bord du satellite et les envoyant à une Unité Centrale chargée de gérer les différents équipements à bord.

Les futures charges utiles pour répéteurs de télécommunications spatiales à large bande devraient comporter des centaines de canaux de transmission, permettant d'interconnecter les stations ou terminaux terrestres localisés dans les différentes cellules de la couverture satellite à faisceaux multiples. Ces faisceaux utilisent des bondes de fréquences élevées (bande Ku, Ka, Q...) et reposent très souvent sur le principe de réutilisation de sous-bandes fréquentielles.

Pour répondre aux évolutions journalières du trafic entre les différentes cellules comme aux évolutions à long terme d'une mission censée durer plus de 10 ans, il est nécessaire de doter la charge utile de moyens de brassage des canaux et de configuration à la demande des connexions entre faisceaux montants et faisceaux descendants. Ces moyens permettront d'établir des "routes" entre les faisceaux de réception et les faisceaux d'émission des antennes, et d'allouer plus ou moins de ressources de transmission à chacune des route.

Les architectures actuelles de répéteurs mettent en oeuvre des équipements micro-ondes. Les moyens à disposition pour réaliser ce brassage de canaux sont des convertisseurs de fréquence, des filtres de canaux, des coupleurs et des commutateurs micro-ondes. Les solutions actuelles de commutation reposent sur des commutateurs électromécaniques ou des circuits intégrés monolithiques microondes (en anglais "MMIC") sur semi-conducteur, tous du type 1:N. Une matrice de connexion NxN est donc réalisée à partir de 2N éléments interconnectés par $N^2$ chemins. Il en résulte une certaine complexité d'interconnexion dans les harnais de câbles et/ou dans les matrices de connexion, qui limite la taille et/ou la flexibilité des modes de réalisation classiques. En pratique, ceci ne permet pas d'envisager raisonnablement des tailles de matrice bien supérieures à 10x10 voire 20x20. Le traitement parallèle mis en oeuvre dans les micro-systèmes opto-électromécaniques ("MOEMS") permet de réaliser des commutateurs optiques dont les des tailles sont de l'ordre de plusieurs 10x10 voire 100 x100 (avec une complexité qui croit en 2N et non pas en $N^2$).

D'autres approches radicalement différentes, comme les processeurs numériques transparents (PNT), sont efficaces pour traiter quelques canaux avec une granularité (ou résolution en fréquence) plus fine, mais n'ont pas la capacité de traiter de telles bandes passantes avec des performances en termes de masse, d'encombrement et de consommation compétitives

La présente invention a donc pour but de mettre au point un dispositif de brossage de signaux qui interconnecte les équipements de la section d'entrée délivrant des signaux micro-ondes multiplex d'entrée provenant d'au moins une antenne de réception à ceux de la section de sortie aptes à délivrer respectivement N signaux micro-ondes multiplex de sortie vers au moins une antenne d'émission, tout en assurant le routage d'un nombre importent de canaux de transmission opérant dans différentes bandes ou sous-bandes de fréquence.

A cet effet, la présente invention propose un dispositif de brassage spatio-fréquentiel de signaux pour un répéteur de télécommunications d'un véhicule spatial de télécommunications selon la revendication 1.

Selon un mode de réalisation, les antennes de réception et d'émission fonctionnant selon le principe de réutilisation de fréquences, f étant le nombre de sous-bandes de fréquences et s étant le facteur de réutilisation de ces sous bandes de fréquences, N étant alors égal à f.s, l'unité comprend une première série de f générateurs de signaux d'oscillateurs locaux suivis respectivement d'un émetteur optoélectronique, chacun de ces derniers délivrant son signal aux s modulateurs optiques reliés à la voie de réception utilisant la même sous-bande de fréquence.

Selon un mode de réalisation, chaque sous-bande de fréquence comportant k canaux ordonnés de 1 à k (étant entendu que le terme de canal dans le cas des k canaux de fréquence prend la signification de tranche fréquentielle ou encore de créneau fréquentiel), chaque modulateur optique est relié en sortie à un amplificateur optique apte à amplifier le signal optique de sortie du modulateur et à un coupleur opte à le diviser en puissance et à le distribuer aux moyens de commutations constitués de k sous-matrices carrées de taille f.s x f.s, chaque sous-matrice traitant les canaux d'un rang qui lui est propre et redistribuant lesdits canaux sur f.s.k voies d'émission.

Selon un mode de réalisation, les canaux sont regroupés, en sortie des moyens de commutation, par groupes de k voies d'émission pour former f.s signaux multiplex de manière à ce que chaque canal conserve le rang qui lui était conféré dans le signal multiplex d'entrée d'origine.

Selon un mode de réalisation, l'unité comprend également une seconde série de f générateurs de signaux d'oscillateurs locaux couplés à leur émetteur optoélectronique propre, chacun d'eux délivrant son signal aux mélangeurs respectifs de s groupes de k voies d'émission destinés à utiliser la même sous-bande de fréquence d'émission, de manière à faire subir sur chacune des voies d'émission une conversion en plus hautes fréquences.

Selon un mode de réalisation, les N signaux micro-ondes multiplex d'entrée comportant chacun k canaux de fréquence espacé de $\Delta\omega$, entre chacun des f générateurs de signaux d'oscillateurs locaux de fréquence propre $\omega_{LO}$ de ladite première série suivis de leur propre émetteur optoélectronique et leurs s modulateurs optiques correspondants se trouve un multiplexeur de longueurs d'ondes, ce dernier multiplexant la sortie de chacun desdits émetteurs optoélectroniques reliés aux générateurs respectifs de fréquence propre $\omega_{LO}$ avec la sortie de k-1 convertisseurs photo-électriques reliés à k-1 générateurs de signaux d'oscillateurs locaux dont les fréquences respectives sont $\omega_{LO}+\Delta\omega$,..., $\omega_{LO}+(k-1)\,\Delta\omega$, ledit couplage assurant la translation de fréquences multiples des k canaux sur les voies d'entrée.

L'invention a également pour objet un répéteur de télécommunications, caractérisé en ce qu'il comporte un dispositif de brassage spotio-fréquentiel de signaux selon l'invention

L'invention a également pour objet un satellite de télécommunications, caractérisé en ce qu'il comporte un répéteur selon l'invention.

L'idée de base est donc d'exploiter ou mieux les technologies optiques pour réaliser un répéteur « brasseur spatio-fréquentiel », qui interconnecte les équipements de la section d'entrée à ceux de la section de sortie, et assure le routage des différents canaux de transmission opérant dans différentes bandes ou sous-bandes de fréquence.

En particulier:

- les modulateurs optiques d'intensité sont utilisés comme mélangeurs optiques pour réaliser des transpositions de fréquences RF ("down-conversion" en anglais).

- le multiplexage en longueur d'onde est largement mis à profit pour transporter plusieurs signaux sur le même support (une fibre par exemple), ou encore mélanger un signal avec plusieurs signaux optiques d'oscillateurs locaux simultanément sans pour autant créer d'interférences.

En outre, les technologies de commutation optique sont largement utilisées et l'ensemble est organisé de façon à minimiser le nombre de conversions électrique/optique et optique/électrique.

Les caractéristiques et avantages de la présente invention apparaîtront plus clairement à la lecture de la description qui suit, donnée à titre d'exemples illustratifs non limitatifs et faite en référence aux figures annexées dans lesquelles :

- la figures 1 représente un répéteur de télécommunications selon un mode de réalisation de l'invention,
- la figure 2 illustre un mélange optique pour une conversion multiple en plus basses fréquences,
- la figure 3 représente le principe de réutilisation de fréquences,
- la figure 4 représente un répéteur de télécommunications selon une variante de l'invention,
- la figure 5 illustre le schéma de commutation des ports d'accès et des sous-bondes de fréquence
- la figure 6 représente un répéteur de télécommunications selon une seconde variante de l'invention,
- la figure 7 illustre le schéma de commutation des ports d'accès, des sous-bandes de fréquence et des canaux de fréquence,
- la figure 8 représente un répéteur de télécommunications selon une troisième variante de l'invention,

Dans la suite, les éléments remplissants des fonctions identiques porteront les mêmes références.

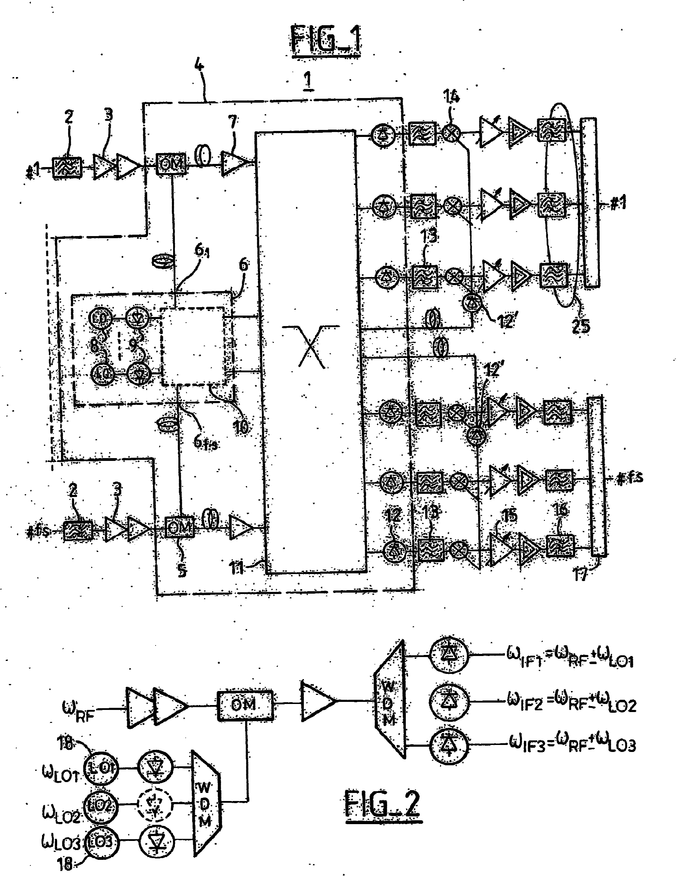

La figure 1 représente un répéteur 1 de télécommunications selon un mode de réalisation de l'invention.

Le répéteur 1 comporte à son entrée f.s voies d'entrée pour véhiculer f.s signaux de télécommunication montants. Chacun de ces signaux attaque sur chacune de leurs voies respectives un filtre de sous-bande 2 dont la sortie est connectée respectivement à un amplificateur 3 à faible bruit (en anglais LNA ou "Low Noise Amplifier"). Chacune des sorties des amplificateurs 3 est reliée via une entrée du dispositif de brassage 4 à un modulateur optique 5.

Chacun des modulateurs optiques 5 est relié à une unité 6 de génération et de distribution de signaux optiques d'oscillateurs locaux. Cette unité 6 comporte une pluralité d'oscillateurs locaux 8, chacun de ces oscillateurs locaux 8 étant relié à un émetteur optoélectronique 9 apte à délivrer un signal d'oscillateur local optique à un centre 10 de distribution de signaux d'oscillateurs locaux. Le centre 10 est alors relié, via des ports de sortie $6_1,... 6_{fs}$, de l'unité 6, à tous les modulateurs optiques 5 par une de leurs autres entrées.

Ainsi tous les oscillateurs locaux 8 nécessaires sont générés de manière centralisée et sont distribués sous forme optique aux modulateurs optiques 5 situés dans des sections d'entrée. Les modulateurs optiques 5 sont alimentés par ces oscillateurs locaux optiques de l'unité 6 d'une part, et par les signaux de télécommunication micro-ondes issus des antennes (non représentées) de réception d'autre part. Les modulateurs optiques 5 sont capables alors de délivrer en sortie un signal optique dont le spectre comporte une composante fréquentielle à fréquence intermédiaire (f - $f_{OL}$) et réalisent ainsi une transposition vers une fréquence plus basse (en anglais "Down Conversion"). Ces signaux optiques de sortie sont ensuite, respectivement sur chacune des voies, amplifiés par un amplificateur 7, puis délivrés vers des ports d'entrée d'une unité de commutation et d'aiguillage 11. Cette unité 11 a pour fonction de distribuer et d'aiguiller les signaux d'entrée, tel que nous le verrons dans la suite, vers des ports de sortie.

Il sera explicité dans les figures suivantes comment, étant entendu que chaque sous-bande de fréquence dans les voies de réception #1, ..., #f.s comporte k canaux ordonnés de 1 à k, les k canaux de chacune des voies sont départagés et aiguillés vers les k.f.s ports de sortie de l'unité de commutation

Les signaux véhiculant les k.f.s canaux étant ainsi réorientés chacun vers les ports de sortie, sont convertis par des récepteurs optoélectroniques 12 pour restituer, respectivement sur chacune des voies d'émission de sortie, un signal radiofréquence. Ce signal radiofréquence est filtré par un filtre de canal 13 dont la sortie est reliée à une première entrée d'un mélangeur 14.

Par ailleurs, les canaux sont regroupés, en sortie de l'unité de commutation, par groupes 25 de k voies d'émission pour former f.s signaux multiplex de manière à ce que chaque canal conserve le rang qui lui était conféré dans le signal multiplex d'entrée d'origine, tel que détaillé dans la suite.

En outre, l'unité 6 comporte, comme détaillé dans la suite, une série de générateurs de signaux optiques d'oscillateurs locaux, chacun d'eux délivrant son signal aux mélangeurs 14 respectifs de s groupes de k voies d'émission destinés à utiliser la même sous-bande de fréquence d'émission, de manière à faire subir sur chacune des voies d'émission une conversion en plus hautes fréquences. Ces signaux d'oscillateurs locaux sont fournis aux mélangeurs 14 grâce à des récepteurs optoélectroniques 12'. En effet, chacun de ces signaux optiques d'oscillateurs locaux sont fournis à l'entrée d'un récepteur optoélectronique 12'. La sortie de ce récepteur 12' fournit un signal analogique d'oscillateur local qui est pourvu à une deuxième entrée des mélangeurs 14. Les signaux RF retransposés en séquences sont alors amplifiés par des amplificateurs variables 15 puis filtrés par des filtres de canal 16. Les signaux RF sont alors combinés dans des combineurs 17 respectifs pour être dirigés vers des faisceaux descendants numérotés de 1 à f. s.

On notera qu'il est connu d'utiliser des modulateurs optiques pour le mélange de fréquence. La fonction de transfert sinusoïdale bien définie des modulateurs optiques intégrés à structure interférométrique de Mach-Zehnder rend ces derniers attractifs pour leurs utilisations en tant que mélangeurs radiofréquence, ainsi qu'il a été démontré initialement dans la référence: G. K. Gopalakakrishnan et al., « A LiNbO3 microwave-optoelectronic mixer with linear performance », in IEEE MTT-S Dig, 1993, pp.1055-1058. La conversion en plus basse fréquence et en plus haute fréquence de signaux micro-ondes peut être réalisée en utilisant cette technique attractive. En premier lieu, de tels schémas sont compatibles avec une distribution optique du signal d'oscillateur local tout en garantissant une isolation excellente du port d'entrée OL vers RF. En second lieu, un tel schéma permet de transporter par voie optique des signaux RF entrants et rend ainsi possible de traiter ces signaux par la suite par des moyens optiques, tout en évitant la nécessité d'utiliser des sources laser modulables à haute fréquence à l'interface d'entrée/sortie et des photodétecteurs de grande bande passante à l'interface de sortie

Beaucoup d'arrangements pour le mélange de fréquences par voie optique basés sur le modulateur ont été démontrés. L'un des plus simples consiste à moduler directement la puissance optique délivrée par un laser à une fréquence LO et à alimenter le modulateur optique avec celui-ci. Le signal RF à convertir en plus basse fréquence est appliqué à l'électrode du modulateur, imposant de ce fait une surmodulation de l'intensité optique à une fréquence RF. La détection directe génère les fréquences suivantes sur la photodiode : à la fois les fréquences LO et RF ainsi que les produits de battement, à savoir les fréquences somme et différence. En choisissant la fréquence LO et la bande passante du photodétecteur de façon appropriée, les fréquences LO, RF et somme peuvent être filtrées de manière à ce que seule la fréquence intermédiaire IF se rende disponible à la sortie.

Un autre arrangement consiste à générer la fréquence LO directement sous forme optique à partir d'un oscillateur photonique micro-onde, qui peut être un laser bi-fréquence ou une boucle optique verrouillée en phase (en anglais OPLL pour "Optical Phase-locked Loop") ou qui être réalisé par modulation à double bande latérale et suppression de porteuse d'un laser en régime contenu.

Plus récemment, te principe de conversion à fréquences multiples basé sur le multiplexage par répartition en longueurs d'onde (en anglais WDM pour "wavelength division multiplexing") d'un modulateur a été introduit (W. Shen et al., « Microwave Signal Mixing by Using a Fiber-based Optoelectronic Oscillcitor for Wavelength Division Multiplexed Systems », TDA Progress Report 42-129, May 1997). En particulier, la conversion en fréquence plus basse à canalisation a été démontrée dans le document suivant : J. Strutz et al., « An 8-18-GHZ All-Optical Microwave Downconverter with Channelization » IEEE Transactions on Microwave Theory and Techniques, vol.49, n°10, October 2001, pp. 1992-1995.

La figure 2 illustre comment ce dernier principe peut être utilisé dans le contexte de répéteur analogique. Le modulateur optique peut être alimenté simultanément à partir d'oscillateurs locaux optiques multiples en mettant en oeuvre le multiplexage par répartition en longueurs d'onde. Ainsi, il est possible de réaliser simultanément avec le même dispositif une conversion en fréquence plus basse multiple provenant d'un seul signal entrant à une fréquence $\omega_{RF}$ vers

plusieurs signaux à des fréquences $\omega_{IFl}$.

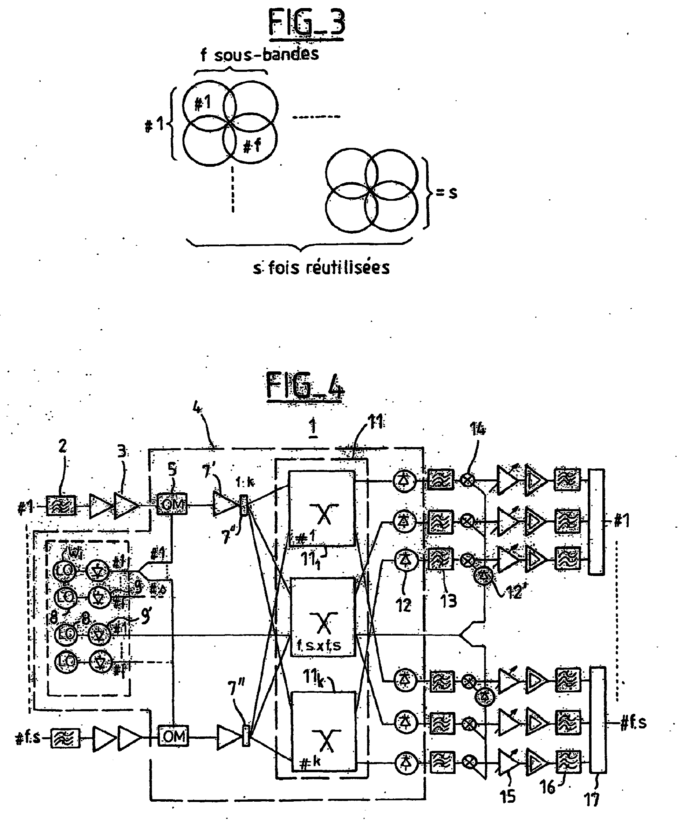

Dans la suite, il sera considéré un répéteur à multiples faisceaux pour des bandes de fréquence Ka à couverture d'antenne cellulaire. Ce répéteur met en oeuvre, tel que représenté sur la figure 3, le principe de réutilisation de fréquence à f sous-bandes de fréquence, réutilisant s fois chaque bande de fréquence de manière à interconnecter f. s faisceaux montants entrants à f.s faisceaux descendants, et de manière à traiter k canaux de fréquence par sous-bande de fréquence.

A titre d'exemple non limitatif, considérant par exemple que la bande passante totale allouée à une mission est de 1 GHz, les exemples typiques possibles sont les suivants :

- le nombre f de sous-bandes de fréquence est égal à 4, chaque sous bande ayant une bande de 250 MHz,
- le nombre k de canaux de fréquence est égal à 3 (soit une bande par canal de 72 MHz environ), ou égal à 6 (soit une bande par canal de 36 MHz environ)
- le nombre de faisceaux, f.s pris par exemple égal à 24 (s étant alors égal à 6),
- le nombre total de canaux, f.s.k est alors de 72 x 72 MHz, respectivement de 144 x 36 MHz.

La figure 4 représente un répéteur de télécommunications selon une variante de l'invention. Cette architecture permet de réaliser un dispositif de brassage spacio-fréquentiel de canaux transparents avec commutation d'accès et de sous-bandes fréquentielles. Chaque convertisseur 5 a une sortie pour fibres optiques destinée à véhiculer le signal micro-ondes à une fréquence intermédiaire sur une porteuse optique. Le signal optique est amplifié à travers un amplificateur optique 7' approprié, divisé en puissance puis distribué à un nombre déterminé de sous-matrices de commutation. S'il y a k canaux RF, le signal est distribué à k sous-matrices carrées $11_1$, ..., $11_k$ de taille f.s x f.s.

Ces sous-matrices font la connexion entre les signaux d'entrée vers les photodétecteurs à bande passante IF qui font l'interface avec le filtre 13 passe bonde de canal

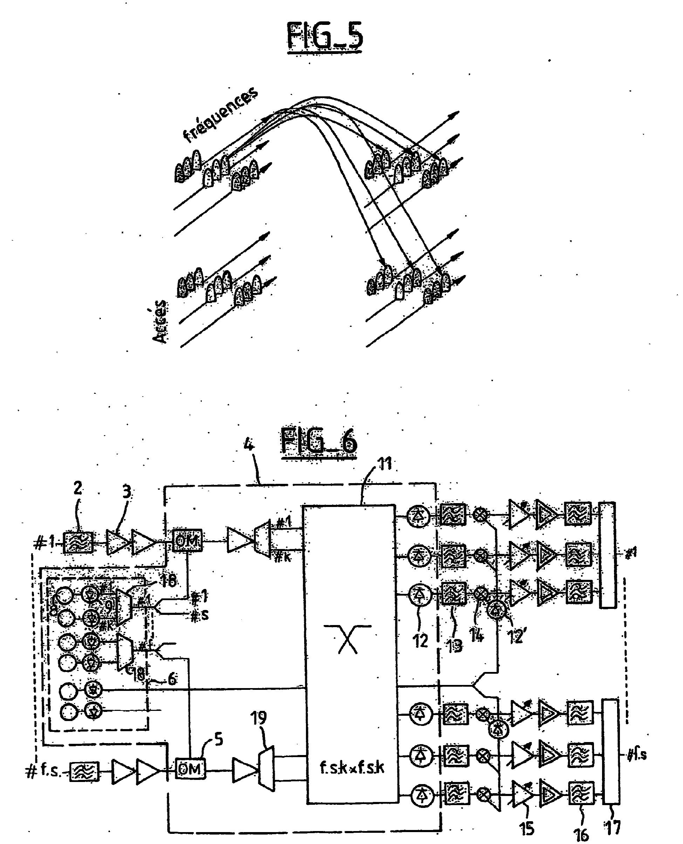

L'architecture du répéteur de la figure 4 réalise la fonction de commutation, telle que schématisée sur la figure 5. En effet, elle interconnecte les canaux RF par échange entre accès et sous bandes mais sans échange entre canaux de fréquence (en anglais "frequency-slot").

Comme il est illustré sur la figure 4, s'il y a f sous-bandes de fréquences, une première série de f fréquences LO différentes doivent être générées, chacune devant être distribuée aux s modulateurs optiques 5 reliés respectivement à la voie de réception utilisant la même sous-bande de fréquence.

Ici encore, le nombre total de canaux interconnectés est égal à f.s.k. Ainsi, les avantages de l'architecture du présent mode de réalisation résident dans la réduction du nombre de conversions successives optoélectroniques et dans les isolations des ports LO vers RF.

La figure 5 illustre le schéma de commutation des ports d'accès et des sous-bandes de fréquences. L'unité de commutation 11 de la figure 4 peut être vue comme un ensemble de k plans de commutation $11_1$,..., $11_k$ en parallèle, chacun gérant et interconnectant des canaux de fréquence occupant le même rang dans les multiplex de canaux.

Ainsi qu'il est illustré sur la figure 5, un canal d'entrée donné entrant dans un port d'accès montant peut être routé vers un quelconque canal de sortie de même rang sur n'importe quel port d'accès descendant.

En d'autres termes, un tel répéteur est capable d'interconnecter des canaux RF en échangeant les accès et les sous-bandes mais sans échanger les canaux de fréquence.

La figure 6 représente un répéteur de télécommunication selon une seconde variante de l'invention. Elle illustre une autre architecture d'un répéteur multifaisceaux à double conversion qui incorpore des technologies optiques pour la distribution et le mélange de signaux LO et l'interconnexion de signaux micro-ondes à des fréquences intermédiaires.

Ici encore, le mélange fréquentiel à l'entrée de la conversion en plus basse fréquence est réalisé à partir de modulateurs optiques 5. Les signaux d'oscillateur local requis pour les modulateurs optiques 5 sont générés au sein de l'unité de génération 6 et sont distribués de façon optique au convertisseur de fréquence optique. Ces convertisseurs de fréquence optique sont basés sur les modulateurs optiques 5 selon le principe de l'invention.

En plus, le principe de multiplexage par répartition en longueur d'onde ("WDM") est utilisé pour alimenter le convertisseur en fréquence plus basse optique avec plus d'un signal LO de manière à réaliser simultanément des translations de fréquences multiples. Ces signaux LO sont sélectionnés de manière à présenter plusieurs fréquences toutes espacées de manière égale par l'espacement de canal de fréquence. S'il y a k canaux de fréquences séparés par $\Delta\omega$, le jeu suivant de k signaux de fréquence LO est généré :

$$\omega_{LO}, \omega_{LO}+\Delta\omega, ..., \omega_{LO}+(k-1)\,\Delta\omega .$$

A titre d'exemple, s'il y a 3 canaux de 72 MHz de bande passante, séparés chacun de 80 MHz, 3 signaux de fréquence LO séparés doivent être générés par incrément de 80 MHz.

EP 1 545 035 B1

Tous ces signaux LO sont transférés sur des porteuses optiques qui ont des longueurs d'onde séparées et bien définies. Ils sont rassemblés sur une même fibre optique grâce à un multiplexeur18 de longueur d'onde et distribués au modulateur 5 optique.

Ainsi, les f.s signaux micro-ondes multiplex d'entrée comportant chacun k canaux de fréquence espacés de $\Delta\omega$, entre chacun des f générateurs 8 de signaux d'oscillateurs locaux de fréquence propre $\omega_{LO}$ de ladite première série suivis de leur propre émetteur 9 optoélectronique et leurs s modulateurs optiques (5) correspondants se trouve un multiplexeur 18 de longueurs d'onde, ce dernier multiplexant la sortie de chacun desdits émetteurs 9 optoélectroniques reliés aux générateurs 8 respectifs de fréquence propre $\omega_{LO}$ avec la sortie de k-1 émetteurs 9 optoélectroniquesreliés à k-1 générateurs de signaux d'oscillateurs locaux dont les fréquences respectives sont $\omega_{LO}+\Delta\omega,..., \omega_{LO}+(k-1)\Delta\omega$, ledit couplage assurant la translation de fréquences multiples des k canaux sur les voies d'entrée.

Comme le signal micro-onde entrant à la fréquence $\omega_{RF}$ sur la voie d'entrée du répéteur est appliqué au modulateur 5, les k fréquences intermédiaires suivantes sont générées simultanément, chacune étant portée par une longueur d'onde séparée à la sortie du modulateur

$$\omega_{RF}-\omega_{LO}, \omega_{RF}-\omega_{LO}-\Delta\omega,..., \omega_{RF}-\omega_{LO}-(k-1)\Delta\omega$$

La fibre optique de sortie du modulateur optique 5 véhicule les signaux micro-ondes à fréquence intermédiaire sur k longueurs d'ondes optiques qui sont amplifiés à travers un amplificateur 7 optique approprié, puis démultiplexés selon k fibres optiques grâce à un démultiplexeur 19 et enfin distribués sur les ports d'entrée de la matrice 11 de commutation optique (unité de commutation et d'interconnexion). S'il y a k canaux par sous-bande de fréquence, et f.s accès montants, la taille de la matrice carrée est de f.s.k x f.s.k

La matrice connecte les signaux d'entrée à f.s.k récepteurs optoélectroniques à largeur de bande IF qui interfacent les filtres passe-bande de canaux. Les filtres, qui sont au nombre de f.s.k et sont identiques, sont mis en oeuvre à la fréquence IF, typiquement dans les bandes C ou S.

En implémentant la connexion physique appropriée à travers la matrice de commutation, n'importe quel canal de fréquence peut être rendu disponible à la sortie de n'importe quel filtre. Cette architecture de répéteur à multiples faisceaux est capable d'interconnecter des canaux RF en échangeant les accès et les sous-bandes, et en échangeant également les canaux.

Si la bande C (à peu près de 3 à 5 GHz) est adoptée comme fréquence intermédiaire, les fréquences LO générées par unité 6 doivent être à hauteur de 25-27 GHz (car la fréquence à l'entrée du répéteur se situe à peu prés autour de 30 GHz). S'il y a f sous-bandes de fréquence, f groupes de k fréquences LO différentes doivent être générées, chacune étant distribuée à s convertisseurs en plus basse fréquence (modulateur optique 5). Ici encore, le nombre total de canaux interconnectés est égal à f.s.k.

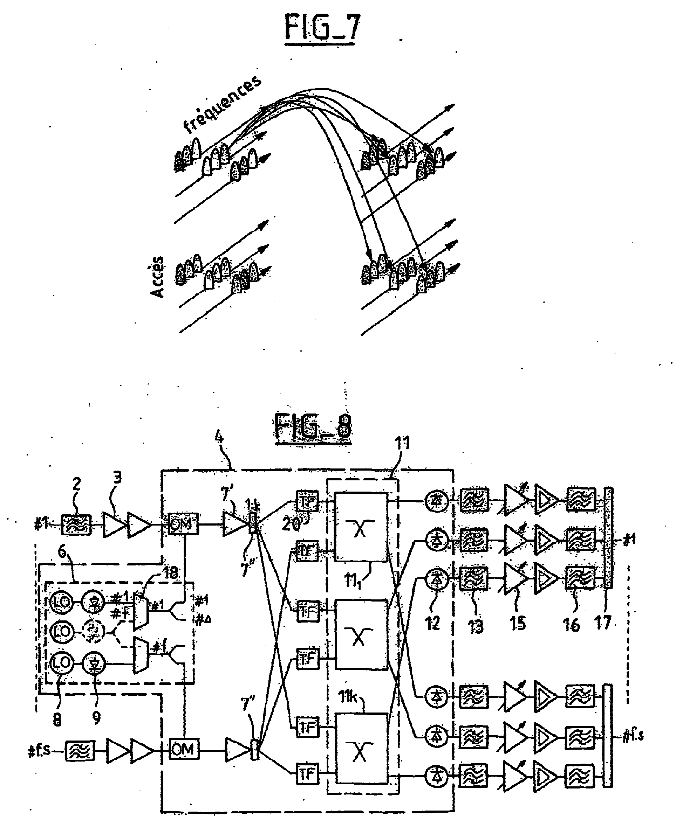

Le répéteur à multiples faisceaux de l'architecture de la figure 6 supporte sur la fonction de commutation à connectivité totale, qui est schématisée sur la figure 7.

L'unité de commutation (matrice de commutation) peut être vue comme un unique commutateur à connectivité totale qui soit reconfigurable dans un mode dit strictement non bloquant.

N'importe quel canal d'entrée donné, entrant d'un port d'accès montant peut être routé vers n'importe quel canal de sortie d'un port d'accès descendant.

En d'autres termes, une telle architecture de répéteur est capable d'interconnecter des canaux RF en échangeant de façon totale les accès, les sous-bandes et les canaux.

Des répéteurs avec de simples conversions directes d'une bande Ka en voie montante vers la même bande Ka sur la voie descendante n'offre généralement pas une interconnectivité suffisamment flexible. Une architecture de répéteur à double conversion (Ka-IF-Ka) est en principe requise pour permettre de router des canaux de n'importe quel faisceau montant vers n'importe quel faisceau descendant.

La figure 8 représente une variante d'architecture d'un répéteur à faisceaux multiples reconfigurable avec seulement un simple étage de conversion de fréquence. L'architecture incorpore, comme ci-dessus, des technologies optiques pour la distribution et le mélange de signaux d'oscillateurs locaux et pour l'interconnexion de signaux micro-ondes à la fréquence Ka en voie descendante. Le mélange de fréquences sur le convertisseur de plus basse fréquence est réalisé à travers les modulateurs optiques 5. Les oscillateurs locaux requis sont générés au niveau de l'unité de génération d'oscillateurs locaux 6 et sont distribués optiquement sur les convertisseurs de fréquence optique.

Ainsi que dons l'architecture de la variante précédente, le principe de multiplexage par répartition en longueur d'onde (WDM) est utilisé pour alimenter le convertisseur en plus basse fréquence optique avec plus d'un signal LO de manière à réaliser simultanément des transpositions de fréquences multiples. Ces signaux LO sont choisis de manière à avoir plusieurs fréquences, toutes également espacées par l'espacement entre sous-bandes de fréquence. S'il y a f sous-bondes de fréquences séparées par $\Delta\omega$, le jeu suivant de (2.f-1) fréquences LO est généré :

$$\omega_{LO}\text{-}(f\text{-}1)\Delta\omega, \dots, \omega_{LO}\text{-}\Delta\omega, \omega_{LO}, \omega_{LO}\text{+}\Delta\omega, \dots, \omega_{LO}\text{+}(f\text{-}1)\Delta\omega$$

Par exemple, s'il y a 4 sous bandes, espacées de 250 MHz, 7 fréquences LO différentes devront être générées par incrément de 250 MHz.

Ces signaux LO sont transférés sur des porteuses optiques qui ont une longueur d'onde différente et bien définie grâce à des émetteurs 9 optoélectroniques. Ils sont ensuite groupés par groupes de f signaux de la façon suivante, étant entendu que deux groupes consécutifs de rang i et i+1 partagent le signal LO de fréquence la plus basse du second groupe i+1 :

$$\text{- } 1^{er} \text{ groupe : } \omega_{LO}\text{-}(f\text{-}1)\Delta\omega, \dots, \omega_{LO}\text{-}\Delta\omega, \omega_{LO}$$

$$\text{- } 2^{ème} \text{ groupe : } \omega_{LO}\text{-}(f\text{-}2)\Delta\omega, \dots, \omega_{LO}\text{-}\Delta\omega, \omega_{LO}, \omega_{LO}\text{+}\Delta\omega$$

$$\dots\dots$$

$$\text{- } f_{ième} \text{ groupe : } \omega_{LO}, \omega_{LO}\text{+}\Delta\omega, \dots, \omega_{LO}\text{+}(f\text{-}1)\Delta\omega$$

Tous les signaux LO rassemblés au sein d'un même groupe sont combinés sur une même fibre optique grâce à un multiplexeur par répartition en longueur d'onde 18 et distribués aux s modulateurs optiques reliés aux voies de réception utilisant la même sous-bande de fréquence.

Comme le signal micro-onde entrant à la fréquence $\omega_{RF}$ est appliqué au modulateur 5, les f fréquences descendantes suivantes sont générées simultanément:

$$\omega_{RF}\text{-}\omega_{LO}, \omega_{RF}\text{-}\omega_{LO}\text{+}\Delta\omega, \dots, \omega_{RF}\text{-}\omega_{LO}\text{+}(f\text{-}1)\Delta\omega$$

Chacune de ces fréquences est portée sur une longueur d'onde différente dans la fibre optique de sortie du modulateur 5. La fibre de sortie du modulateur véhicule ces f signaux micro-ondes à f fréquences intermédiaires sur f longueurs d'ondes optiques, qui sont amplifiés à travers un amplificateur optique approprié, et divisés en puissance sur k fibres optiques puis distribués sur les ports d'entrée de k matrices de commutation optique $11_1$, ..., $11_k$. De manière particulière, les matrices de commutation comportent à leur entrée des filtres optiques accordables 20 (référencés, sur la figure 8, TF pour "Tunable Filter") qui sont destinés à sélectionner l'un quelconque des f canaux de longueur d'onde.

S'il y a f.s accès en voie montante, et k canaux de fréquence, il est alors nécessaire d'avoir k matrices de taille f.s x f.s. Chaque matrice connecte les signaux d'entrée à f.s récepteurs optoélectroniques photo-détecteurs à largeur de bande de la fréquence descendante, ces récepteurs interfaçant les filtres passe bande de canal. Une banque de k filtres 13 remplace le multiplexeur d'entrée. Chaque accès de sortie a une banque de k filtres 13. Au total, il y a k.f jeux identiques de s filtres. Ces filtres doivent être mis en oeuvre à la fréquence de la voie descendante, typiquement dans la bande 18-21 GHz.

L'ensemble des matrices de commutation $11_1$,...,$11_k$ agit comme k plans de commutation en parallèle, chacun gérant et interconnectant des canaux de fréquence occupant le même rang dans le multiplexe de canal. Le filtre optique accordables 20 est ici pour sélectionner la longueur d'onde portant le signal micro-onde

Ainsi n'importe quel canal d'entrée donné entrant par un port d'accès montant peut être routé vers n'importe quel canal sortant de même rang et sur n'importe quel port d'accès descendant. Cette architecture de répéteur à faisceaux multiples est capable d'interconnecter des canaux RF en échangeant les accès et les sous-bandes, mais sans échanger les canaux.

Les fréquences des signaux LO sont dans la gamme [7-13 GHz]. Le principal avantage de cette architecture est qu'il permet une interconnexion flexible avec seulement un seul étage de conversion de fréquence. D'un autre coté, l'invonvénient réside dans le fait que les filtres passe-bande doivent travailler sur la gamme de fréquences de la voie descendante Ka, à savoir 18-21 GHz, où une haute sélectivité n'est pas facilement atteinte.

Le tableau suivant résume les différentes fonctionnalités globales, les blocs fonctionnels et leurs caractéristiques principales, pour les différentes architectures de répéteur qui ont été précédemment décrites.

Le nombre et les caractéristiques des blocs fonctionnels ont été donnés dans le cas gérénique d'un répéteur défini à travers ces paramètres f, s et k et gérant f.s.k canaux (f étant le nombre de sous bandes de fréquences, s étant le facteur de réutilisation de ces sous bandes de fréquences et k étant le nombre de canaux par sous-bonde de fréquence).

Il est à remarquer bien entendu qu'il n'a pas été indiqué dans la présente demande l'intégralité des composants requis pour la mise en oeuvre de ces architectures. Par exemple les lasers et/ou les modulateurs qui sont requis pour la distribution des signaux LO ne sont pas explicitement indiqués ni les amplificateurs optiques requis pour la compensations des pertes.

| | Architecture A (Figure 4) | Architecture B (Figure 6) | Architecture C (Figure 8) |
|---|---|---|---|
| Distribution signal LO | Optique | Optique | Optique |
| Fréquence LO | 24 – 28 GHz | 24 – 28 GHz | 7 – 13 GHz |
| Nombre total de signaux LO | $f$ | $f.k$ | $2f-1$ |
| Facteur de réutilisation | $s$ | $s$ | $s$ |
| Nombre de signaux | 1 | $k$ | $f$ |

| LO par port | | | |
|---|---|---|---|
| Frequence de conversion en plus basse fréquence | Simple / Ka vers IF | Multiple/ Ka vers IF | Multiple/ Ka montant vers Ka descendant |
| Nombre de mélanges optiques | $f.s$ | $f.s$ | $f.s$ |
| Nombre de conversions par mélangeur | 1 | $k$ | $f$ |
| Commutation | Optique | Optique | Optique |
| Fonction de commutation | connecter $f.s.k$ canaux par échange de ports d'accès et de sous-bandes | connecter $f.s.k$ canaux par échange de port d'accès, sous- bandes et canaux | connecter $f.s.k$ canaux par échange de ports d'accès et de sous-bandes |
| Nombre de matrices de commutation | $k$ | 1 | $k$ |
| Taille de la matrice | $f.s \times f.s$ | $f.s.k \times f.s.k$ | $f.s \times f.s$ |
| Autres dispositifs de commutation | | | $f.s.k$ filtres accordables |
| Nombre de photodetecteurs | $f.s.k$ | $f.s.k$ | $f.s.k$ |
| Fréquence du photodetecteur & du filtre | IF (e.g. C band) | IF (e.g. C band) | Ka-descendant |
| Filtre RF passebande | Microonde | Microonde | Microonde |
| Nombre de filtres RF | $k$ jeux de $f.s$ filtres identiques | 1 jeu de $f.s.k$ filtres identiques | $k.f$ jeux de $s$ filtres identiques |

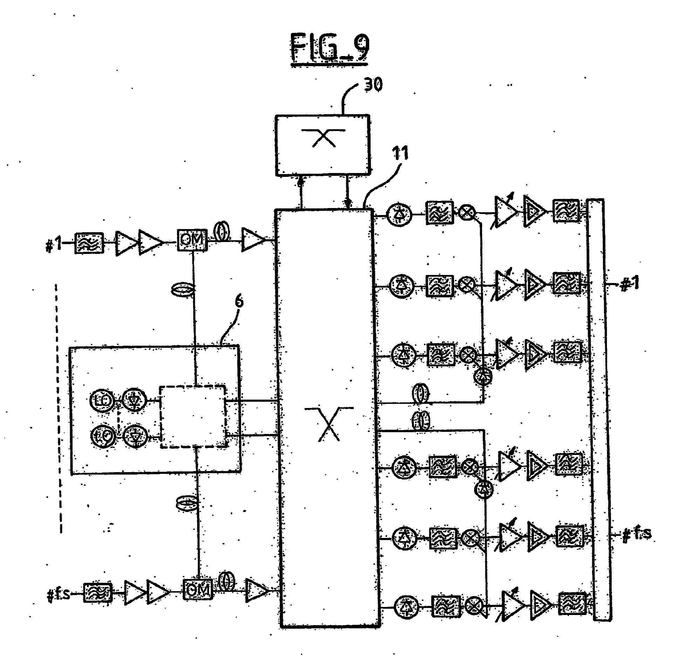

La figure 9 représente une variante des modes de réalisation précédents avec des moyens additionnels pour extraire une partie des canaux montants et les diriger vers un processeur numérique 30 pour des fonctions de filtrage et de routage avec une résolution plus fine.

En sus des signaux LO déjà présentés, l'unité 6 génère dans cette variante un signal d'échantillonnage optique sur une longueur d'onde supplémentaire. Ce signal d'échantillonnage consiste en un flux continu de pulsations optiques très courtes (de durée de l'ordre de la picoseconde) avec une fréquence de répétition au moins égale ou supérieure à la largeur de bande des signaux microondes montants.

Le signal d'échantillonnage optique peut être délivré à l'un quelconque des modulateurs optiques au lieu de ou en plus des longueurs d'ondes qui portent les signaux LO. Le flux des échantillons optiques disponible à la sortie du modulateur optique est dirigé vers le processeur numérique. Le processeur comporte des entrées équipées de photo-détecteurs et autres moyens appropriés connus de l'Homme du Métier pour adapter les échantillons optiques vers des convertisseurs analogique-numériques, et comporte des sorties équipées de sources optiques.

Ainsi, le processeur peut réaliser un routage de sous-canal et outre traitement fin. Cette variante peut s'appliquer à l'un quelconque des précédents mode de réalisation.

L'invention est bien entendu applicable à des bandes de fréquence autres que celles données à titre illustratif.

L'invention peut être étendue à des dispositifs où les fréquences centrales des sous-bandes ou des canaux de fréquence (tranches fréquentielles) ne sont pas régulièrement espacées, comme décrit précédemment. Dans ce cas, les fréquences des oscillateurs locaux prennent des valeurs qui, elles-mêmes, ne sont pas régulièrement espacées et il peut être nécessaire de générer un plus grand nombre d'oscillateurs locaux.

L'invention peut être étendue à des dispositifs comportant un nombre d'accès de sortie différent du nombre d'accès d'entrée, à des dispositifs comportant un nombre de sous-bandes par accès de sortie différent du nombre de sous-bandes par accès d'entrée, ainsi quà des dispositifs comportant un nombre de canaux par sous-bande de sortie différent du nombre de canaux par sous-bandes d'entrée. Ceci peut conduire en particulier à utiliser des matrices ou sous-matrices non carrées, comportant un nombre de ports de sortie différent du nombre de ports d'entrée.

L'invention peut être étendue à des dispositifs comportant un nombre de canaux par sous-bande différents selon les accès, en entrée comme en sortie.

Bien entendu, l'invention n'est pas limitée aux modes de réalisation décrits dans la présente demande.


**Revendications**

1. Dispositif de brassage spatio-fréquentiel de signaux pour un répéteur de télécommunications d'un véhicule spatial de télécommunications, le répéteur comportant une première pluralité d'entrées (#1, ..., #f.s) apte à recevoir respectivement N signaux micro-ondes multiplex d'entrée à une fréquence $f_{RF}$ provenant d'au moins une antenne de réception, une seconde pluralité de sorties (#1, ..., #f.s) apte à délivrer respectivement N, N étant >l, signaux micro-ondes multiplex de sortie vers au moins une antenne d'émission, ledit dispositif (11) comportant:

   - une unité (6) de génération et de distribution de signaux optiques d'oscillateurs locaux (LO, 8) à une fréquence ($f_{OL}$) et étant **caractérisé en ce qu'**il comporte un ensemble de N modulateurs optiques (OM, 5) d'intensité aptes à être alimentés respectivement d'une part par un des N signaux micro-ondes multiplex d'entrée et d'autre part par au moins un parmi une pluralité de signaux optiques d'oscillateurs locaux de l'unité (6), chaque modulateur étant alors utilisé comme mélangeur optique pour délivrer en sortie un signal optique de sortie du modulateur qui véhicule au moins une composante fréquentielle dite à fréquence intermédiaire $f_{RF} - f_{OL}$ sur au moins une porteuse optique,
   et étant entendu que chaque sous-bande de fréquence comporte k canaux ordonnés de 1 à k.
   - des moyens de commutation et d'aiguillage (11, $11_1$,..., $11_k$) comportant N.k entrées pour recevoir respectivement les canaux desdits signaux de sortie du modulateur et les aiguiller selon une configuration donnée respectivement vers des premiers photo-détecteurs (12) aptes à délivrer N.k signaux radiofréquence intermédiaires de sortie,
   - lesdits N.k signaux radiofréquence intermédiaires de sortie étant traités par des moyens de traitement (8', 9', 13, 14, 12',15, 16, 17) de manière à fournir N signaux radiofréquence muliplex délivrables à ladite au moins une antenne d'émission.

2. Dispositif selon la revendication 1, **caractérisé en ce que**, les antennes de réception et d'émission fonctionnant selon le principe de réutilisation de fréquences, f étant le nombre de sous-bandes de fréquences et s étant le facteur de réutilisation de ces sous bandes de fréquences, N étant alors égal à f.s, l'unité (6) comprend une première série de f générateurs (8) de signaux d'oscillateurs locaux suivis respectivement d'un émetteur (9) optoélectronique, chacun de ces derniers délivrant son signal aux s modulateurs optiques reliés à la voie de réception utilisant la même sous-bande de fréquence.

3. Dispositif selon la revendication 2, **caractérisé en ce que**, chaque sous-bande de fréquence comportant k canaux ordonnés de 1 à k, un canal étant une tranche fréquentiel, chaque modulateur optique est relié en sortie à un amplificateur optique (7') et un coupleur (7") apte à diviser en puissance le signal optique de sortie du modulateur pour le délivrer aux moyens de commutation constitués de k sous-matrices carrées ($11_1$, ..., $11_k$) de taille f.s x f.s, chaque sous-matrice traitant les canaux d'un rang qui lui est propre et redistribuant lesdits canaux sur f.s.k voies d'émission.

4. Dispositif selon la revendication 3, **caractérisé en ce que** les canaux sont regroupés, en sortie des moyens de commutation, par groupes de k voies d'émission pour former f.s signaux multiplex de manière à ce que chaque canal conserve le rang qui lui était conféré dans le signal multiplex d'entrée d'origine.

5. Dispositif selon la revendication 4, **caractérisé en ce que** l'unité (6) comprend également une seconde série de f générateurs de signaux d'oscillateurs locaux (8') couplés à leur photodétecteur (9') propre, chacun d'eux délivrant son signal aux mélangeurs (14) respectifs de s groupes de k voies d'émission destinés à utiliser la même sous-bande de fréquence d'émission, de manière à faire subir sur chacune des voies d'émission une conversion en plus hautes fréquences.

6. Dispositif selon l'une des revendications 2 à 5, **caractérisé en ce que**, les N signaux micro-ondes multiplex d'entrée comportant chacun k canaux de fréquence espacé de $\Delta\omega$, entre chacun des f générateurs (8) de signaux d'oscillateurs locaux de fréquence propre $\omega_{LO}$ de ladite première série suivis de leur propre émetteur (9) optoélectronique et leurs s modulateurs optiques correspondants se trouve un multiplexeur (18) de longueurs d'ondes, ce dernier multiplexant la sortie de chacun desdits émetteurs (9) optoélectroniques reliés aux générateurs (8) respectifs de fréquence propre $\omega_{LO}$ avec la sortie de k-1 émetteurs (9) optoélectroniques reliés à k-1 générateurs de signaux d'oscillateurs locaux dont les fréquences respectives sont $\omega_{LO}+\Delta\omega,...,\omega_{LO}+(k-1)\Delta\omega$, ledit couplage assurant la translation de fréquences multiples des k canaux sur les voles d'entrée.

7. Dispositif selon la revendication 2, **caractérisé en ce que** l'unité (6) comporte 2f-1 générateurs de signaux d'oscillateurs locaux LO et en **en ce que** f groupes de signaux LO sont formés de manière non exclusive et glissante pour permettre, pour chacun des groupes, la génération, après multiplexage, de f signaux LO successifs, les 2f-1 signaux LO d'origine étant : $\omega_{LO}-(f-1)\Delta\omega, ..., \omega_{LO}-\Delta\omega, \omega_{LO}, \omega_{LO}+\Delta\omega,..., \omega_{LO}+(f-1)\Delta\omega$,
et **en ce que** deux groupes consécutifs de rang i et i+1 partagent le signal LO de fréquence la plus basse du second groupe i+1 de la manière suivante

- 1er groupe : $\omega_{LO}-(f-1)\Delta\omega, ..., \omega_{LO}-\Delta\omega, \omega_{LO}$

- 2ème groupe : $\omega_{LO}-(f-2)\Delta\omega, ..., \omega_{LO}-\Delta\omega, \omega_{LO}, \omega_{LO}+\Delta\omega$

.......

- fième groupe : $\omega_{LO}, \omega_{LO}+\Delta\omega, ..., \omega_{LO}+(f-1)\Delta\omega$

8. Dispositif selon l'une des revendications 1 à 7, **caractérisé en ce que** l'unité (6) comporte des moyens de génération d'un signal d'échantillonnage optique porté par une longueur d'onde supplémentaire en sortie d'un modulateur (5), cette dernière longueur d'onde permettant d'extraire et d'aiguiller une partie des canaux vers un équipement de sortie, ceci grâce à un processeur numérique exerçant une fonction de filtrage et de routage avec une résolution plus fine.

9. Répéteur de télécommunications, comportant une première pluralité d'entrées (#1, ..., #f.s) opte à recevoir respectivement N signaux micro-ondes multiplex d'entrée à une fréquence $f_{RF}$ provenant d' au moins une antenne de réception, une seconde pluralité de sorties (#1,..., #f.s) opte à délivrer respectivement N N étant >I signaux micro-ondes multiplex de sortie vers au moins une antenne d'émission **caractérisé en ce qu'**il comporte un dispositif selon l'une des revendications 1 à 6.

10. Satellite de télécommunications, **caractérisé en ce qu'**il comporte un répéteur selon la revendication 9.

**Claims**

1. Device for the space-frequency cross-connecting of signals for a telecommunications repeater of a space telecommunications vehicle, the repeater comprising a first plurality of inputs (#1, ..., #f.s) able to receive respectively N input multiplex microwave signals at a frequency $f_{RF}$ originating from at least one receiving antenna, a second plurality of outputs (#1, ..., #f.s) able to deliver respectively N, N being >1, output multiplex microwave signals to at least one transmitting antenna, said device (11) comprising:

- a unit (6) for generating and distributing optical signals from local oscillators (LO, 8) at a frequency ($f_{OL}$) and being **characterized in that** it comprises a set of N optical modulators (OM, 5) of an intensity able to be powered respectively on the one hand by one of the N input multiplex microwave signals and on the other hand by at least one out of a plurality of optical signals from local oscillators of the unit (6), each modulator then being used as an optical mixer to deliver to the output a modulator output optical signal that conveys at least one frequency component said to be at intermediate frequency $f_{RF}$ - $f_{OL}$ on at least one optical carrier, and it being understood that each frequency subband comprises k channels ordered from 1 to k,
- switching and directing means (11, $11_1$, ..., $11_k$) comprising N.k inputs for receiving respectively the channels of said modulator output signals and directing them according to a given configuration respectively to first photodetectors (12) able to deliver N.k output intermediate radiofrequency signals,
- said N.k output intermediate radiofrequency signals being processed by processing means (8', 9', 13, 14, 12', 15, 16, 17) so as to provide N multiplex radiofrequency signals that can be delivered to said at least one transmitting antenna.

2. Device according to Claim 1, **characterized in that**, the receiving and transmitting antennas operating according to the frequency re-use principle, f being the number of frequency subbands and s being the re-use factor of these frequency subbands, N then being equal to f.s, the unit (6) comprises a first series of f generators (8) of signals from local oscillators followed respectively by an optoelectronic transmitter (9), each of the latter delivering its signal to the s optical modulators linked to the receive pathway using the same frequency subband.

3. Device according to Claim 2, **characterized in that**, each frequency subband comprising k channels ordered from 1 to k, a channel being a frequency block, each optical modulator is linked at the output to an optical amplifier (7') and a coupler (7'') able to divide in power the modulator output optical signal to deliver it to the switching means comprising k square submatrices ($11_1$, ..., $11_k$) of size f.s $\times$ f.s, each submatrix processing the channels of a rank that is specific to it and redistributing said channels over f.s.k transmission pathways.

4. Device according to Claim 3, **characterized in that** the channels are grouped together, at the output of the switching means, in groups of k transmission pathways to form f.s multiplex signals so that each channel retains the rank that it was given in the original input multiplex signal.

5. Device according to Claim 4, **characterized in that** the unit (6) also comprises a second series of f local oscillator signal generators (8') coupled to their own photodetector (9'), each of them delivering its signal to the respective mixers (14) of s groups of k transmission pathways intended to use the same transmission frequency subband, so as to have each of the transmission pathways undergo a conversion to higher frequencies.

6. Device according to one of Claims 2 to 5, **characterized in that**, the N input multiplex microwave signals each comprising k channels of frequencies with a spacing of $\Delta\omega$, between each of the f local oscillator signal generators (8) of natural frequency $\omega_{LO}$ of said first series followed by their own optoelectronic transmitter (9) and their s corresponding optical modulators there is a wavelength multiplexer (18), the latter multiplexing the output of each of said optoelectronic transmitters (9) linked to the respective generators (8) of natural frequency $\omega_{LO}$ with the output of k-1 optoelectronic transmitters (9) linked to k-1 local oscillator signal generators whose respective frequencies are $\omega_{LO}+\Delta\omega$, ..., $\omega_{LO}+(k-1)\Delta\omega$, said coupling ensuring the multiple frequency translation of the k channels on the input pathways.

7. Device according to Claim 2, **characterized in that** the unit (6) comprises 2f-1 local oscillator signal generators LO and **in that** f groups of LO signals are formed in a non-exclusive and rolling manner to enable, for each of the groups, the generation, after multiplexing, of f successive LO signals, the 2f-1 original LO signals being: $\omega_{LO}-(f-1)\Delta\omega$, ..., $\omega_{LO}-\Delta\omega$, $\omega_{LO}$, $\omega_{LO}+\Delta\omega$, ..., $\omega_{LO}+(f-1)\Delta\omega$,
and **in that** two consecutive groups of rank i and i+1 share the lowest frequency LO signal of the second group i+1 as follows:

```
- 1st group: ωLO-(f-1)Δω, …, ωLO-Δω, ωLO
- 2nd group: ωLO-(f-2)Δω, …, ωLO-Δω, ωLO, ωLO+Δω
.......
- fth group: ωLO, ωLO+Δω, …, ωLO+(f-1)Δω
```

8. Device according to one of Claims 1 to 7, **characterized in that** the unit (6) comprises means of generating an optical sampling signal carried by an additional wavelength at the output of a modulator (5), the latter wavelength making it possible to extract and direct a portion of the channels to output equipment, using a digital processor applying a filtering and routing function with finer resolution.

**9.** Telecommunications repeater, comprising a first plurality of inputs (#1, ..., #f.s) able to receive respectively N input multiplex microwave signals at frequency $f_{RF}$ originating from at least one receiving antenna, a second plurality of outputs (#1, ..., #f.s) able to deliver respectively N, N being >1, output multiplex microwave signals to at least one transmitting antenna, **characterized in that** it comprises a device according to one of Claims 1 to 6.

**10.** Telecommunications satellite, **characterized in that** it comprises a repeater according to Claim 9.


**Patentansprüche**

**1.** Vorrichtung zur Raum-Frequenz-Querverbindung von Signalen für einen Telekommunikationsmerstärker eines Telekommunikations-Raumfahrzeugs, wobei der Verstärker eine erste Vielzahl von Eingängen (#1, ..., #f.s), die fähig sind, N Eingangsmultiplex-Mikrowellensignale auf einer Frequenz $f_{RF}$ zu empfangen, die von mindestens einer Empfangsantenne kommen, und eine zweite Vielzahl von Ausgängen (#1, ..., #f.s) aufweist, die fähig sind, N Ausgangsmultiplex-Mikrowellensignale, mit N >|, an mindestens eine Sendeantenne zu liefern, wobei die Vorrichtung (11) aufweist:

- eine Einheit (6) zur Erzeugung und Ausgabe von optischen Signalen lokaler Oszillatoren (LO, 8) auf einer Frequenz ($f_{OL}$) und **dadurch gekennzeichnet, dass** sie eine Gruppe von N optischen Intensitätsmodulatoren (OM, 5) aufweist, die fähig sind, jeweils einerseits von einem der N Eingangsmultiplex-Mikrowellensignale und andererseits von mindestens einem aus einer Vielzahl von optischen Signalen lokaler Oszillatoren der Einheit (6) gespeist zu werden, wobei jeder Modulator dann als optischer Mischer verwendet wird, um am Ausgang ein optisches Ausgangssignal des Modulators zu liefern, das mindestens eine Frequenzkomponente, als Komponente mit Zwischenfrequenz $f_{RF}$ - $f_{OL}$ bezeichnet, auf mindestens einer optischen Trägerwelle transportiert, und unter der Voraussetzung, dass jedes Frequenz-Subband k Frequenzabschnitte aufweist, die von 1 bis k geordnet sind,
- Mittel zur Umschaltung und Abzweigung (11, $11_1$, ..., $11_k$), die N. k Eingänge aufweisen, um die Frequenzabschnitte der Ausgangssignale des Modulators zu empfangen und sie gemäß einer gegebenen Konfiguration zu ersten Fotodetektoren (12) umzulenken, die fähig sind, N.k Zwischen-Radiofrequenzausgangssignale zu liefern,
- wobei die N.k Zwischen-Radiofrequenzausgangssignale von Verarbeitungsmitteln (8', 9', 13, 14, 12', 15, 16, 17) verarbeitet werden, um N Multiplex-Radiofrequenzsignale zu liefern, die an die mindestens eine Sendeantenne geliefert werden können.

**2.** Vorrichtung nach Anspruch 1, **dadurch gekennzeichnet, dass**, wenn die Empfangs- und Sendeantennen nach dem Prinzip der Wiederverwendung von Frequenzen arbeiten, wobei f die Anzahl von Frequenz-Subbändern und s der Wiederverwendungsfaktor dieser Frequenz-Subbander ist, wobei N dann gleich f.s ist, die Einheit (6) eine erste Reihe von f Generatoren (8) lokaler Oszillatorsignale jeweils gefolgt von einem optoelektronischen Emitter (9) aufweist, wobei jeder dieser letzteren sein Signal an die s optischen Modulatoren liefert, die mit dem Empfangskanal verbunden sind, der das gleiche Frequenz-Subband verwendet.

**3.** Vorrichtung nach Anspruch 2, **dadurch gekennzeichnet, dass**, wenn jedes Frequenz-Subband k von 1 bis k geordnete Frequenzabschnitte aufweist, wobei ein Frequenzabschnitt ein Frequenzbereich ist, jeder optische Modulator am Ausgang mit einem optischen Verstärker (7') und mit einem Koppler (7") verbunden ist, der fähig ist, die Leistung des optischen Ausgangssignals des Modulators zu teilen, um es an die Schaltmittel zu liefern, die aus k quadratischen Submatrizen ($11_1$, ..., $11_k$) der Größe f.s x f.s bestehen, wobei jede Submatrix die Frequenzabschnitte eines Rangs verarbeitet, der ihr eigen ist, und die Frequenzabschnitte auf f.s.k Sendekanälen neu verteilt.

**4.** Vorrichtung nach Anspruch 3, **dadurch gekennzeichnet, dass** die Frequenzabschnitte am Ausgang der Schaltmittel in Gruppen von k Sendekanälen zusammengefasst werden, um f.s Multiplexsignale zu formen, damit jeder Frequenzabschnitt den Rang beibehalt, der ihm im ursprünglichen Eingangsmultiplexsignal verliehen wurde.

**5.** Vorrichtung nach Anspruch 4, **dadurch gekennzeichnet, dass** die Einheit (6) ebenfalls eine zweite Reihe von f Generatoren lokaler Oszillatorsignale (8') enthalt, die mit ihrem eigenen Fotodetektor (9') gekoppelt sind, wobei jeder von ihnen sein Signal an die jeweiligen Mischer (14) von s Gruppen von k Sendekanälen liefert, die dazu bestimmt sind, das gleiche Sendefrequenz-Subband zu verwenden, um jeden der Sendekanale einer Umwandlung in höhere Frequenzen zu unterziehen.

**6.** Vorrichtung nach einem der Ansprüche 2 bis 5, **dadurch gekennzeichnet, dass,** wenn die N Eingangsmultiplex-Mikrowellensignale je k Frequenzabschnitte mit einem Abstand von $\Delta\omega$ aufweisen, sich zwischen jedem der f Generatoren (8) lokaler Oszillatorsignale einer Eigenfrequenz $\omega_{LO}$ der ersten Reihe gefolgt von ihrem eigenen optoelektronischen Emitter (9) und ihren s entsprechenden optischen Modulatoren ein Wellenlängen-Multiplexer (18) befindet, wobei letzterer den Ausgang jedes der optoelektronischen Emitter (9), die mit den jeweiligen Generatoren (8) der Eigenfrequenz $\omega_{LO}$ verbunden sind, mit dem Ausgang von k-1 optoelektronischen Emittern (9) multiplexiert, die mit k-1 Generatoren lokaler Oszillatorsignale verbunden sind, deren jeweilige Frequenzen $\omega_{LO}+\Delta\omega$, ..., $\omega_{LO}$+(k-1)$\Delta\omega$ sind, wobei die Kopplung die Translation vieler Frequenzen der k Frequenzabschnitte auf die Eingangskanäle gewährleistet.

**7.** Vorrichtung nach Anspruch 2, **dadurch gekennzeichnet, dass** die Einheit (6) 2f-1 Generatoren lokaler Oszillatorsignale LO aufweist, und dass f Gruppen von Signalen LO nicht-exklusiv und gleitend geformt werden, um für jede der Gruppen die Erzeugung, nach Multiplexierung, von f aufeinanderfolgenden Signalen LO zu erlauben, wobei die 2f-1 ursprünglichen Signale LO sind: $\omega_{LO}$-(f-1)$\Delta\omega$, ..., $\omega_{LO}$-$\Delta\omega$, $\omega_{LO}$, $\omega_{LO}$+$\Delta\omega$, ..., $\omega_{LO}$+(f-1)$\Delta\omega$ und dass zwei aufeinanderfolgende Gruppen des Rangs i und i+1 sich das Signal LO der niedrigsten Frequenz der zweiten Gruppe i+1 in folgender Weise teilen:

```
-   erste Gruppe: ωLO-(f-1)Δω, ..., ωLO-Δω, ωLO
-   zweite  Gruppe:  ωLO-(f-2)Δω,  ...,  ωLO-Δω,  ωLO,
ωLO+Δω
......
-   f-te Gruppe: ωLO, ωLO+Δω, ..., ωLO+(f-1)Δω.
```

**8.** Vorrichtung nach einem der Ansprüche 1 bis 7, **dadurch gekennzeichnet, dass** die Einheit (6) Mittel zur Erzeugung eines optischen Abtastsignals aufweist, das von einer zusätzlichen Wellenlänge am Ausgang eines Modulators (5) getragen wird, wobei diese letztere Wellenlänge es ermöglicht, einen Teil der Frequenzabschnitte zu entnehmen und zu einer Ausgangseinrichtung umzulenken, dies mit Hilfe eines digitalen Prozessors, der eine Filter- und Routingfunktion mit feinerer Auflösung durchführt.

**9.** Telekommunikationsverstarker, der eine erste Vielzahl von Eingängen (#1, ..., #f.s), die fahig sind, je N Eingangsmultiplex-Mikrowellensignale mit einer Frequenz $f_{RI}$ zu empfangen, die von mindestens einer Empfangsantenne kommen, und eine zweite Vielzahl von Ausgängen (#1, ..., #f.s) aufweist, die fähig sind, je N Ausgangsmultiplex-Mikrowellensignale, wobei N >| ist, an mindestens eine Sendeantenne zu liefern, **dadurch gekennzeichnet, dass** er eine Vorrichtung nach einem der Ansprüche 1 bis 6 aufweist.

**10.** Telekommunikationssatellit, **dadurch gekennzeichnet, dass** er einen Verstärker nach Anspruch 9 aufweist.

## FIG_1

## FIG_2

$$\omega_{IF1} = \omega_{RF} \pm \omega_{LO1}$$

$$\omega_{IF2} = \omega_{RF} \pm \omega_{LO2}$$

$$\omega_{IF3} = \omega_{RF} \pm \omega_{LO3}$$

EP 1 545 035 B1

# FIG_3

f sous-bandes

#1

#f

= s

s fois réutilisées

# FIG_4

1

16

# FIG_5

# FIG_6

## FIG_7

## FIG_8

# FIG_9

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **G. K. Gopalakakrishnan et al.** A LiNbO3 microwave-optoelectronic mixer with linear performance. *IEEE MTT-S Dig,* 1993, 1055-1058
- **W. Shen et al.** Microwave Signal Mixing by Using a Fiber-based Optoelectronic Oscillcitor for Wavelength Division Multiplexed Systems. *TDA Progress Report 42-129,* Mai 1997
- **J. Strutz et al.** An 8-18-GHZ All-Oplical Microwave Downconverter with Channelization. *IEEE Transactions on Microwave Theory and Techniques,* Octobre 2001, vol. 49 (10), 1992-1995